(19) Europäisches Patentamt
European Patent Office
Office européen des brevets

(11) **EP 3 594 927 B1**

# (12) EUROPEAN PATENT SPECIFICATION

(45) Date of publication and mention
of the grant of the patent:
**22.03.2023 Bulletin 2023/12**

(21) Application number: **18763792.1**

(22) Date of filing: **21.02.2018**

(51) International Patent Classification (IPC):
**G09F 9/00** *(2006.01)*      **G02F 1/1333** *(2006.01)*

(52) Cooperative Patent Classification (CPC):
**G02F 1/133308; G02F 1/1333; G09F 9/00;**
G02F 1/133331; G02F 2202/023; G02F 2202/28

(86) International application number:
**PCT/JP2018/006186**

(87) International publication number:
**WO 2018/163820 (13.09.2018 Gazette 2018/37)**

## (54) METHOD FOR MANUFACTURING IMAGE DISPLAY DEVICE

VERFAHREN ZUR HERSTELLUNG EINER BILDANZEIGEVORRICHTUNG

PROCÉDÉ DE FABRICATION D'UN DISPOSITIF D'AFFICHAGE D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2017 JP 2017042445**

(43) Date of publication of application:
**15.01.2020 Bulletin 2020/03**

(73) Proprietor: **Dexerials Corporation**
**Tokyo 141-0032 (JP)**

(72) Inventor: **HASHIMOTO, Takao**
**Tokyo 141-0032 (JP)**

(74) Representative: **Müller-Boré & Partner**
**Patentanwälte PartG mbB**
**Friedenheimer Brücke 21**
**80639 München (DE)**

(56) References cited:
**WO-A1-2016/074917      JP-A- 2003 515 796**
**JP-A- 2006 058 753      JP-A- 2011 046 174**
**JP-A- 2015 087 402      JP-A- 2015 142 261**
**JP-A- 2015 162 184      JP-A- 2016 009 033**
**JP-A- 2016 066 607      JP-A- 2016 109 936**
**JP-A- 2017 025 237      US-A1- 2011 205 472**
**US-A1- 2017 059 917**

## EP 3 594 927 B1

**Description**

The present invention relates to a method for manufacturing an image display device in which an image display member such as a liquid crystal display panel and a light transmissive cover member such as a curved transparent protective sheet disposed on the front surface side of the image display member are laminated via a cured resin layer (preferably a light transmissive cured resin layer).

An image display device used in an in-vehicle information terminal such as a car navigation system is manufactured by applying a photocurable resin composition to a flat light transmissive cover member, temporarily curing the composition by ultraviolet irradiation to form a temporarily cured resin layer, then laminating a flat image display member such as a liquid crystal display panel or an organic EL panel on the temporarily cured resin layer, and subsequently irradiating the temporarily cured resin layer with ultraviolet rays again to form a finally cured resin layer. (Patent Literature 1)

Incidentally, in order to improve the design and touch feeling of an image display device for an in-vehicle information terminal, it is demanded to use a light transmissive cover member having a shape curved in one direction. Therefore, attempts have been made to manufacture such an image display device in accordance with the manufacturing method disclosed in Patent Literature 1.

Moreover, Patent Literature 2 describes a display device and a liquid crystal display device as well as a method of manufacturing the same.

Patent Literature 3 discloses a transparent curved surface material with an adhesive layer, a display device, a manufacturing method of a transparent curved surface material with an adhesive layer, and a manufacturing method of a display device.

In addition, Patent Literature 4 relates to a method and an apparatus for an optical bonding, as well as a display.

Patent Literature 5 describes an image display device.

Furthermore, Patent Literature 6 discloses a production method and a production device for a display device.

Patent Literature 7 relates to a display device and a method for fabricating the same.

Besides, Patent Literature 8 describes an exfoliation method, a light-emitting device, a module, and an electronic apparatus.

Patent Literature 9 discloses a support body, a glass substrate laminated body, a display device panel with the support body, and a method for manufacturing the display device panel.

Patent Literature 1: Japanese Patent Application Laid-Open No. 2014-119520
Patent Literature 2: US 2011/205472 A1
Patent Literature 3: JP 2017 025237 A
Patent Literature 4: WO 2016/074917 A1
Patent Literature 5: JP 2015 162184 A
Patent Literature 6: JP 2015 087402 A
Patent Literature 7: JP 2006 058753 A
Patent Literature 8: JP 2016 066607 A
Patent Literature 9: JP 2011 046174 A

Generally, curing shrinkage occurs when a photocurable resin composition is photocured by ultraviolet irradiation. However, in the case of the manufacturing method of Patent Literature 1 in which a flat image display member is laminated on a flat light transmissive cover member, since the coating thickness of the photocurable resin composition is as thin as about 150 $\mu$m and uniform in a plane direction, voids are hardly generated even if the cured resin layer is cured and shrunk, and the influence of the residual stress of the cured resin layer on the image quality can be ignored.

On the other hand, when the photocurable resin composition is applied to the concave surface of the light transmissive cover member having a shape curved in one direction, the coating thickness of the photocurable resin composition in the vicinity of the non-curved side becomes about 0 to 500 $\mu$m. However, the coating thickness of the photocurable resin composition in the central portion of the concave surface becomes much thicker than the coating thickness in the vicinity of the side, and in some cases, it becomes thicker to about several mm. For this reason, the curing shrinkage of the photocurable resin composition becomes remarkably large in the central portion of the concave surface, and as a result, a concave portion is formed in the central portion and a void may occur in the display surface of the assembled image display device. Furthermore, there is a problem that color unevenness occurs in the display due to the residual stress of the cured resin layer even if the void does not occur.

An object of the present invention is to solve the above-mentioned problems of the conventional technique, and to prevent a gap from occurring in a display surface of an assembled image display device and to prevent a color unevenness from occurring in a display due to a residual stress of the cured resin layer even if a gap does not occur, when the image display device is manufactured by laminating an image display member and a curved light transmissive cover member disposed on a front surface side thereof via a cured resin layer of a photocurable resin composition.

The present inventor has found that the above-mentioned object can be achieved by integrating an image display member and a curved light transmissive cover member with each other with a concave surface of the light transmissive cover member facing the image display member to form a hollow body having a hollow portion with an opening as a liquid accommodating portion, filling the liquid accommodating portion with a photocurable resin composition from the opening, and photocuring the photocurable resin composition to concentrate the space generated by the curing shrinkage on the opening side, whereby the present invention was completed.

That is, the present invention provides a method for manufacturing an image display device in which an image display member and a curved light transmissive cover member are laminated with a cured resin layer interposed therebetween,

the method comprising the following steps (A) to (D):

<Step (A)>
a step of integrating the image display member and the curved light transmissive cover member with each other with a concave surface of the light transmissive cover member facing the image display member to form a hollow body having a hollow portion with a pair of first and second openings;
<Step (B)>
a step of disposing a dam member in the first opening of the hollow body to form the hollow portion as a liquid accommodating portion;
<Step (C)>
a step of filling the liquid accommodating portion with a photocurable resin composition from the second opening; and
<Step (D)>
a step of irradiating the photocurable resin composition filled in the liquid accommodating portion with ultraviolet rays from the side of the cured light transmissive cover member to form a cured resin layer while concentrating a cure shrinkage space on the second opening side, wherein the ultraviolet rays are irradiated so as to scan from the first opening side toward the second opening side.

In the manufacturing method of the image display device of the present invention, the image display member and the curved light transmissive cover member are integrated with each other with the concave surface of the light transmissive cover member facing the image display member to form a hollow body having a hollow portion with a pair of first and second openings. Afterwards, a dam member is disposed in the first opening of the hollow body to form the hollow portion as a liquid accommodating portion. Then, the liquid accommodating portion is filled with the photocurable resin composition from the second opening, and subsequently, the photocurable resin composition filled in the liquid accommodating portion is irradiated with ultraviolet rays from the side of the cured light transmissive cover member to form a cured resin layer while concentrating a cure shrinkage space on the second opening side, wherein the ultraviolet rays are irradiated so as to scan from the first opening side toward the second opening side. For this reason, it is possible to prevent voids from occurring on the display surface of the image display device. Furthermore, it is possible to reduce the residual stress of the cured resin layer so as to prevent display color unevenness from occurring.

FIG. 1A is an explanatory view of a step (A) of a manufacturing method of the present invention.
FIG. 1B is an explanatory view of the step (A) of the manufacturing method of the present invention.
FIG. 1C is an explanatory view of a light transmissive cover member.
FIG. 1D is an explanatory view of the light transmissive cover member.
FIG. 2A is an explanatory view of a step (B) of the manufacturing method of the present invention.
FIG. 2B is an explanatory view of the step (B) of the manufacturing method of the present invention.
FIG. 3 is an explanatory view of a step (C) of the manufacturing method of the present invention.
FIG. 4A is an explanatory view of a UV scanning direction in a step (D) of the manufacturing method of the present invention.
FIG. 4B is an explanatory view of the cure shrinkage space formed in the step (D) of the manufacturing method of the present invention.

The present invention is a method for manufacturing an image display device in which an image display member and a curved light transmissive cover member are laminated with a cured resin layer interposed therebetween, and characterized in that the image display member and the curved light transmissive cover member are integrated with each other with the concave surface of the light transmissive cover member facing the image display member, thereby forming a hollow body having a hollow portion with a pair of first and second openings. After that, a dam member is disposed in the first opening of the hollow body to form the hollow portion as a liquid accommodating portion. Then, the liquid accommodating portion is filled with the photocurable resin composition from the second opening and subsequently, the photocurable resin composition filled in the liquid accommodating portion is irradiated with ultraviolet rays from the side of the cured light transmissive cover member to form a cured resin layer while concentrating a cure shrinkage space on the second opening side, wherein the ultraviolet rays are irradiated so as to scan from the first opening side toward the second opening side. Hereinafter, a preferable example of the manufacturing method of the present invention will be described in detail with reference to the drawings.

The manufacturing method of the present invention is a manufacturing method of an image display device in which an image display member and a curved light transmissive cover member are laminated with a cured resin layer interposed therebetween, and has the following steps (A) to (D).

<Step (A): Formation of hollow body>

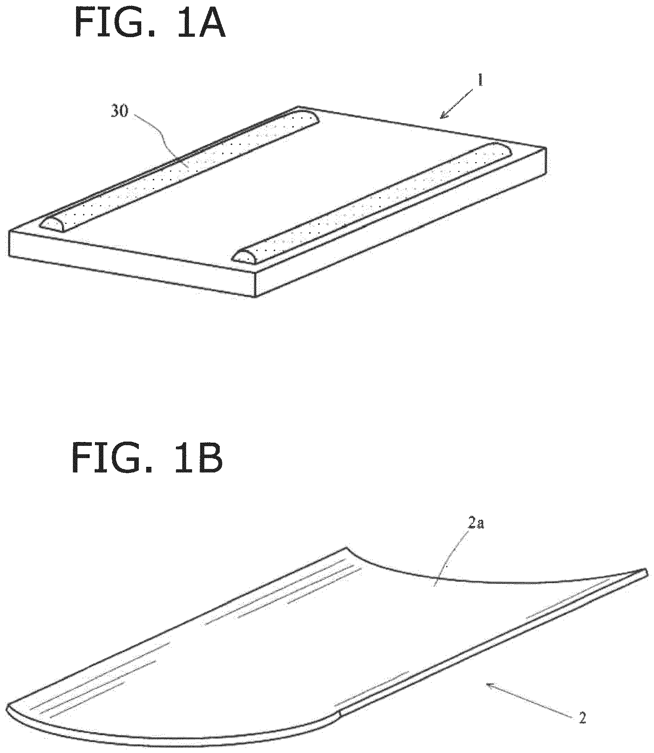

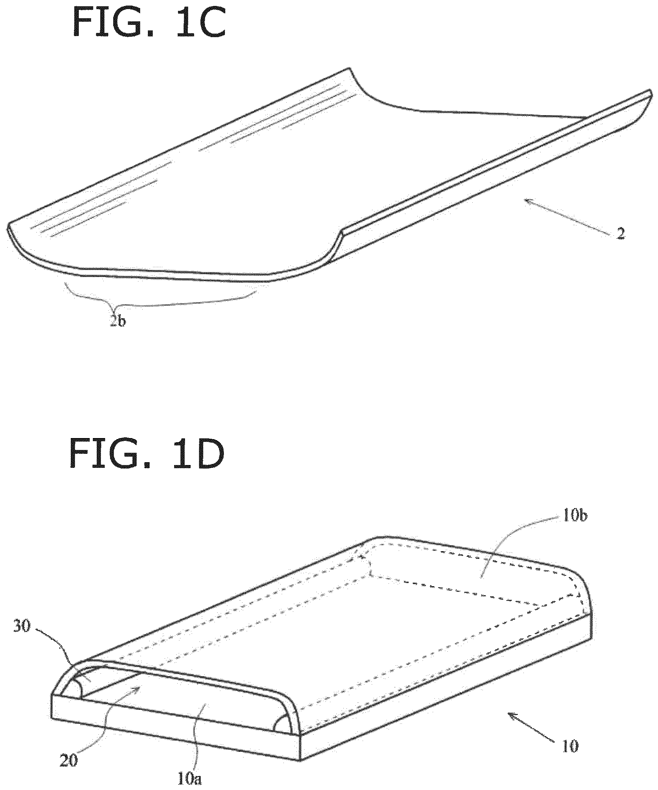

First, the image display member 1 (FIG. 1A) and the curved light transmissive cover member 2 (FIG. 1B) are integrated with each other with a concave surface 2a of the light transmissive cover member 2 facing the image display member 1. As a result, a hollow body 10 having a hollow portion 20 with a pair of a first opening 10a and a second opening 10b is formed (FIG. 1D).

(Image display member 1)

Examples of the image display member 1 may include a liquid crystal display panel, an organic EL display panel, a plasma display panel, and a touch panel. Herein, the touch panel means an image display/input panel in which a display element such as a liquid crystal display panel and a position input device such as a touch pad are combined. It is preferable that the surface of the image display member 1 on the light transmissive cover member 2 side be flat. A polarizing plate may be disposed on the surface of the image display member 1.

(Light transmissive cover member 2)

As a specific shape of the curved light transmissive cover member 2, a shape curved in one direction (for example, a shape on the inferior arc side obtained by cutting a cylindrical pipe in a plane parallel to the central axis of the cylindrical pipe (hereinafter, referred to as a lateral gutter shape)) as shown in FIG. 1B is typically mentioned. A flat part 2b may be formed at the center of this shape (FIG. 1C) .

As the material of the light transmissive cover member 2, any material may be used as long as it is optically transparent such that an image formed on the image display member can be visually recognized. Examples of the material may include resin materials such as glass, an acrylic resin, polyethylene terephthalate, polyethylene naphthalate, and polycarbonate. These materials may be subjected to a single-sided or double-sided hard coating treatment, an anti-reflection treatment, or the like. Dimensional characteristics such as the shape and thickness of the curvature of the light transmissive cover member 2, and physical properties such as elasticity can be appropriately determined according to the intended use.

(Integration of image display member 1 and light transmissive cover member 2)

As shown in FIG. 1D, when the image display member 1 and the light transmissive cover member 2 are integrated with each other with the concave surface 2a of the light transmissive cover member 2 facing the image display member 1 (the polarizing plate if the polarizing plate is disposed on the surface thereof), there is no particular limitation. However, as shown in FIG. 1A, a known hot melt type, thermal curing type, moisture curing type, or photocuring type adhesive 30 may be applied to the surface of the image display member 1 at a position where it comes in contact with the light transmissive cover member 2, and they can be bonded together as shown in FIG. 1D. The adhesive 30 may function as a dam member. In this case, an adhesive may be applied to the light transmissive cover member or both. In particular, it is preferable to use, as the adhesive, the resin same as or equivalent to the photocurable resin composition to be filled in the liquid accommodating portion constituted by the image display member and the curved light transmissive cover member, apply the same to the image display member or the light transmissive cover member, and temporarily cure the same, thereby integrating these components with each other. Due to this configuration, a difference in optical refractive index between the adhesive and the photocurable resin composition to be filled later is less likely to occur, and thus the interface between the adhesive and the photocurable resin composition is less likely to be visually recognized. As a result, production can be performed without deteriorating the appearance of the products. Alternatively, the adhesive may be applied in the shape of a Japanese katakana character "コ" shape so as to fill the first opening. In this case, this step (A) and the step (B) described later are to be performed simultaneously. Note that the image display member 1 and the light transmissive cover member 2 may be opposed to each other without using an adhesive, and may be pressed from the outside to be in close contact with each other.

<Step (B): Formation of liquid accommodating portion>

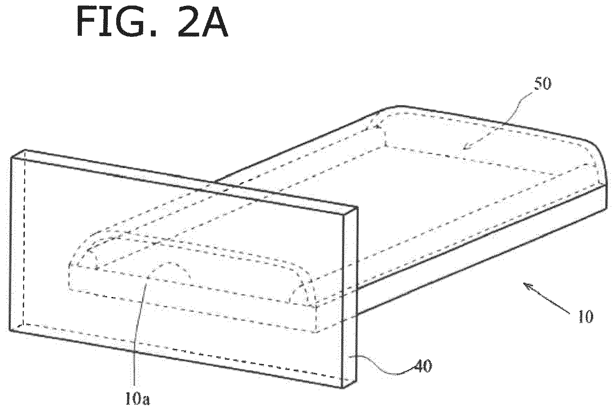

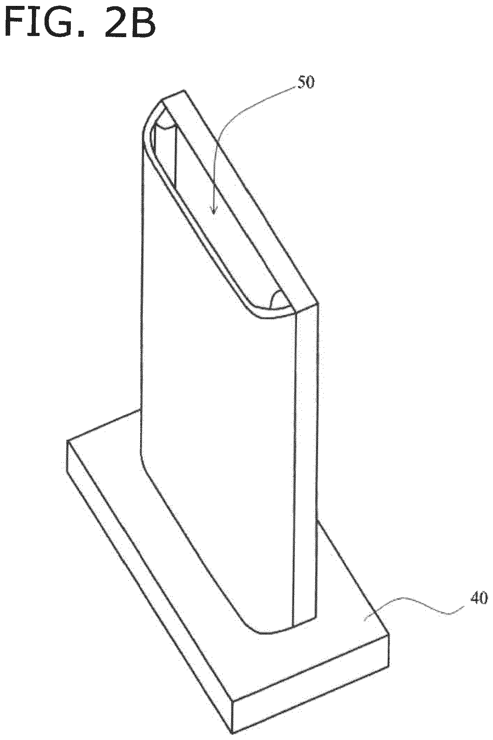

Next, as shown in FIG. 2A, a dam member 40 is disposed in the first opening 10a of the hollow body 10. As a result, the liquid accommodating portion 50 is formed in the hollow body 10. In this case, it is preferable to erect the hollow body 10 (see FIG. 2B). Here, the term "erect" means that the liquid accommodating portion 50 is disposed in an orientation of preferably 30 degrees or more and 90 degrees or less with respect to the horizontal direction. It should be noted that by adjusting the viscosity of the liquid photocurable resin composition to be accommodated in the liquid accommodating portion and the degree of adhesion thereof to the inner wall of the liquid accommodating portion, the liquid accommodating portion 50 may be disposed in an orientation of less than 30 degrees with respect to the horizontal direction.

The dam member 40 may be formed from a known material that can dam the filled photocurable resin composition without being compatible therewith, and can be easily removed after curing of the photocurable resin composition. Examples of the dam member 40 may include a known silicone rubber sheet, and a fluorine resin sheet.

<Step (C): Filling of photocurable resin composition>

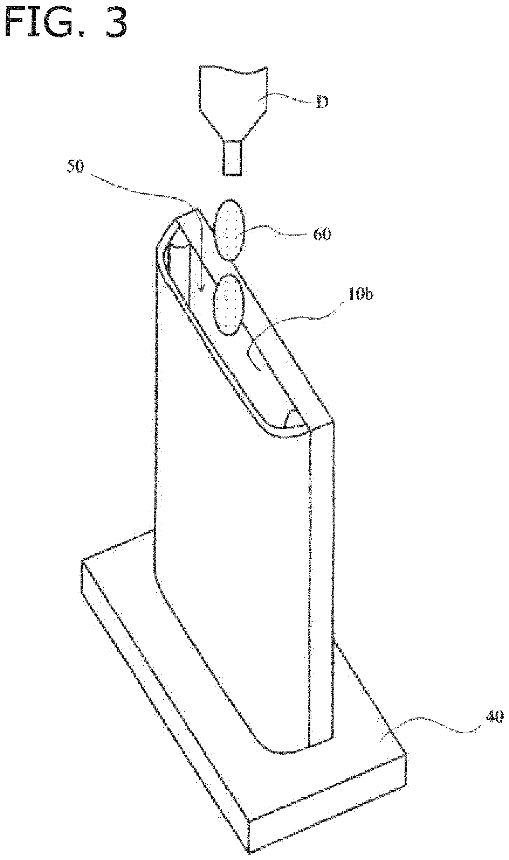

Next, as shown in FIG. 3, the liquid photocurable resin composition 60 is filled into the liquid accommodating portion 50 from the second opening 10b using, for example, a dispenser D. In this case, it is preferable to fill the photocurable resin composition 60 under vacuum from the viewpoint of eliminating air bubbles. In the case where filling under vacuum is difficult in the step, the same defoaming effect can be obtained even when the resulting product is placed under vacuum after filling. However, if a silicone rubber sheet is used as the dam member, care must be taken because the outgas from the silicone rubber may become bubbles when it is placed under vacuum.

(Photocurable Resin Composition 60)

The photocurable resin composition 60 to be filled in the liquid accommodating portion 50 of the hollow body 10 is in a liquid state, and specifically exhibits a viscosity of 0.01 to 100 Pa·s (25°C) in a cone plate type viscometer.

As such a photocurable resin composition 60, may preferably be exemplified a composition containing a base component (component (a)), an acryl-based monomer component (component (b)), a plasticizer component (component (c)), and a photopolymerization initiator (component (d)). The final curing shrinkage rate of the photocurable resin composition 60 is preferably low, but may be 3% or more or 5% or more.

Here, the "final curing shrinkage rate" means the curing shrinkage rate generated between the uncured state and the fully cured state of the photocurable resin composition 60. Here, the term "fully cured" means a state in which the cure rate becomes at least 90% as described later. Hereinafter, the final curing shrinkage rate is referred to as the total curing shrinkage rate.

The cure rate (gel fraction) can be calculated by substituting the absorption peak height (X) of 1640 to 1620 cm$^{-1}$ from the baseline in the FT-IR measurement chart of the resin composition layer before ultraviolet irradiation and the absorption peak height (Y) of 1640 to 1620 cm$^{-1}$ from the baseline in the FT-IR measurement chart of the resin composition layer after ultraviolet irradiation into the following equation.

$$\text{Cure rate (\%)} = \{(X - Y)/Y\} \times 100$$

Further, the total curing shrinkage rate of the photocurable resin composition can be calculated from the difference in specific gravity between the uncured (in other words, pre-cured) composition and the fully cured solid-state completely cured product measured using an electronic specific gravimeter (SD-120L manufactured by Alpha Mirage Co., Ltd.) by the following equation.

$$\text{Total curing shrinkage rate (\%)} = [(\text{specific gravity of completely cured product} - \text{specific gravity of uncured composition}) / \text{specific gravity of completely cured product}] \times 100$$

<Component (a)>

The base component of the component (a) is a film forming component of the cured resin layer, and is a component containing at least any one of an elastomer and an acrylate-based oligomer. Both may be used in combination as the component (a).

As the elastomer, an acrylic copolymer, which is preferably made of a copolymer of acrylic acid ester, polybutene, polyolefin, or the like may preferably be mentioned. Note that the weight-average molecular weight of the acrylic acid ester copolymer is preferably 5000 to 500000, and the number of repeats n of polybutene is preferably 10 to 10000.

On the other hand, as the acrylate-based oligomer, may be mentioned (meth)acrylate-based oligomers having polyisoprene, polyurethane, polybutadiene, and the like as a skeleton. In this specification, the term "(meth)acrylate" encompasses acrylate and methacrylate.

Specific examples of the (meth)acrylate-based oligomers of a polyisoprene skeleton may include esterified products of an anhydrous maleic acid adduct of a polyisoprene polymer and 2-hydroxyethyl methacrylate (UC102 (polystyrene-equivalent molecular weight: 17,000), Kuraray Co., Ltd.; UC203 (polystyrene-equivalent molecular weight: 35,000), Kuraray Co., Ltd.; and UC-1 (polystyrene-equivalent molecular weight: about 25,000), Kuraray Co., Ltd.).

Preferable specific examples of the (meth)acrylate-based oligomers having a polyurethane skeleton may include aliphatic urethane acrylates (EBECRYL230 (molecular weight: 5000), DAICEL-ALLNEX LTD.; and UA-1, Light Chemical Industries Co., Ltd.).

As the (meth)acrylate-based oligomer of a polybutadiene skeleton, a known oligomer can be adopted.

<Component (b)>

The acryl-based monomer component of the component (b) is used as a reactive diluent in order to impart sufficient reactivity, coatability, and the like to the photocurable resin composition in the manufacturing step of the image display device. Examples of such acryl-based monomers may include 2-hydroxypropyl methacrylate, benzyl acrylate, and dicyclopentenyloxyethyl methacrylate.

The total contained amount of the base component of the component (a) and the acryl-based monomer component of the component (b) in the photocurable resin composition 60 is preferably 25 to 85 mass %, and more preferably 30 to 50 mass %.

<Component (c)>

The plasticizer component of the component (c) is used for imparting a buffer property to the cured resin layer and reducing the curing shrinkage rate of the photocurable resin composition, and does not react with the acrylate-based oligomer component of the component (a) and the acryl-based monomer component of the component (b) by irradiation with ultraviolet rays. Such a plasticizer component contains a solid tackifier (1) and a liquid oil component (2).

Examples of the solid tackifier (1) may include terpene-based resins such as a terpene resin, a terpene phenolic resin, and a hydrogenated terpene resin, rosin resins such as natural rosin, polymerized rosin, rosin esters, and hydrogenated rosin, and terpene hydrogenated resins. In addition, a non-reactive oligomer in which the aforementioned acryl-based monomer has been polymerized to have a low molecular weight in advance may be used. Specifically, a copolymer of butyl acrylate and 2-hexyl acrylate, and acrylic acid, a copolymer of cyclohexyl acrylate and methacrylic acid, or the like may be mentioned.

The liquid oil component (2) may contain a polybutadiene-based oil, a polyisoprene-based oil, or the like.

Note that the contained amount of the plasticizer component of the component (c) in the photocurable resin composition 60 is preferably 10 to 65 mass %, and more preferably 25 to 40 mass %.

<Component (d)>

As the photopolymerization initiator of the component (d), a known photoradical polymerization initiator may be used. Examples thereof may include 1-hydroxy-cyclohexylphenyl ketone (Irgacure 184, BASF Japan), 2-hydroxy-1-{4-[4-(2-hydroxy-2-methyl-propylonyl)benzyl]phenyl}-2-methyl-1-propane-1-one (Irgacure 127, BASF Japan), benzophenone, and acetophenone.

Such a photopolymerization initiator is contained in an amount of preferably 0.1 to 5 parts by mass, more preferably 0.2 to 3 parts by mass, with respect to 100 parts by mass of the total of the base component of the component (a) and the acryl-based monomer component of the component (b). This is because if the amount thereof is too small, curing becomes insufficient at the time of irradiation with ultraviolet rays, and if it is too large, outgassing due to cleavage tends to increase and generate foam to cause a problem.

The photocurable resin composition 60 may contain a chain transfer agent for adjusting the molecular weight. Examples thereof may include 2-mercaptoethanol, lauryl mercaptan, glycidyl mercaptan, mercaptoacetic acid, 2-ethylhexyl thioglycolate, 2,3-dimethylcapto-1-propanol, and $\alpha$-methylstyrene dimer.

The photocurable resin composition 60 may further contain general additives such as an adhesion improving agent such as a silane coupling agent, and an antioxidant, as necessary. Note that between this step (C) and the step (D) described later, a pressurized defoaming treatment can be performed.

<Step (D): Ultraviolet irradiation step (cured resin layer formation step)>

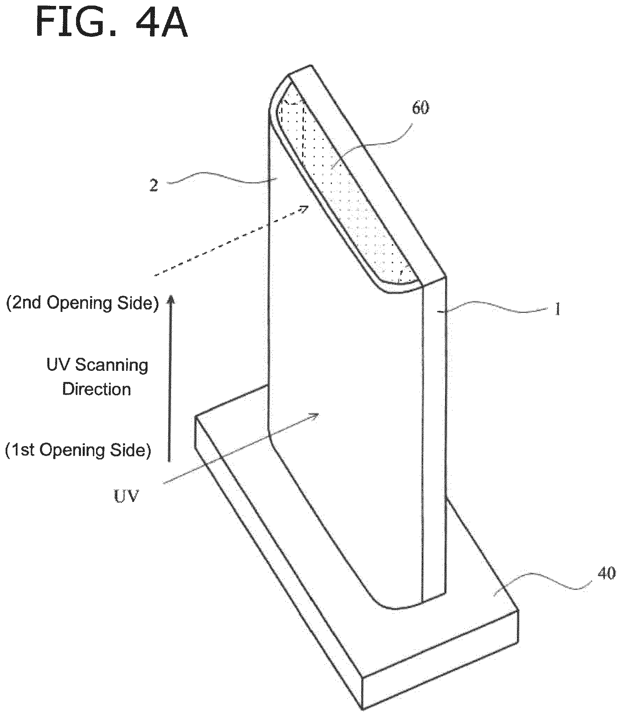

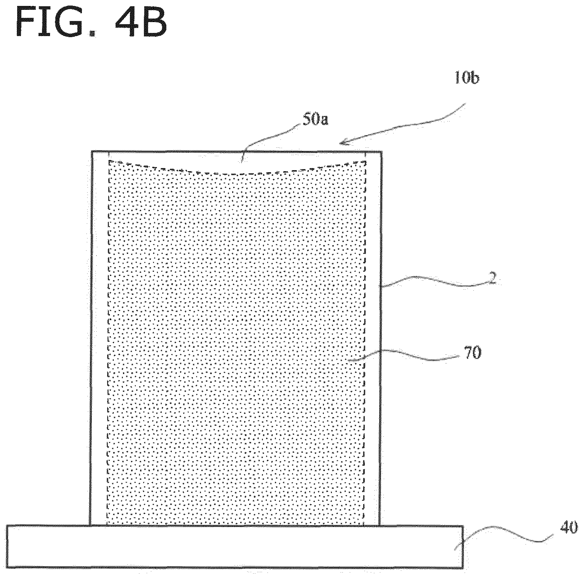

Next, as shown in FIG. 4A, the photocurable resin composition 60 filled in the liquid accommodating portion 50 is irradiated with ultraviolet rays UV from the side of the light transmissive cover member 2 so that a cure rate of 90% or more is preferably achieved. The ultraviolet rays UV are irradiated so as to scan from the first opening side toward the second opening. As a result, the cured resin layer 70, which is preferably light transmissive, is formed while the cure shrinkage space 50a is concentrated on the second opening 10b side as viewed from the UV-irradiation direction (FIG. 4B). As a result, an image display device is obtained in which the image display member and the curved light transmissive cover member are laminated with the cured resin layer interposed therebetween. In the obtained image display device, the stress at the time of curing shrinkage of the photocurable resin composition is concentrated on the second opening side, and as a result, it is possible to prevent voids from being generated in the display surface of the image display device. Even if voids are not generated, it is possible to prevent color unevenness from being generated in the display due to the residual stress of the cured resin layer.

As to the irradiation with ultraviolet rays there are no particular restrictions on the type, output, cumulative amount of light, etc. of the light source as long as the composition can be cured so that the cure rate (gel fraction) preferably reaches 90% or more, and known conditions for the photoradical polymerization process of (meth)acrylate by irradiation with ultraviolet rays can be adopted.

<Additional step: Photocurable resin composition refill step>

When it is required that the cure shrinkage space generated in the step (D) be filled with a resin from the viewpoint of the appearance and display quality of the image display device, the same composition as the photocurable resin composition used in the step (C) can be filled and photocured.

[Examples]

Hereinafter, the present invention will be described in detail with reference to Examples. In the following examples, the total curing shrinkage rate of the photocurable resin composition was calculated by measuring the specific gravity of the photocurable resin composition, and the specific gravity of each of the temporarily cured product and the completely cured product thereof using an electronic specific gravimeter (SD-120L manufactured by Alpha Mirage Co., Ltd.), and applying the measured results to the following equation.

$$\text{Total curing shrinkage rate (\%) = [(specific gravity of completely cured product - specific gravity of uncured composition) / specific gravity of completely cured product]} \times 100$$

Example 1

<Step (A): Formation of hollow body

First, a polyethylene terephthalate plate having a size of 45 (w) × 80 (l) × 3 (t) mm was prepared, and the plate was curved in the widthwise direction by a known technique so as to have a radius of curvature of 300 (r) mm, thereby obtaining a resin cover (FIG. 1B) as a light transmissive cover member having a curved lateral gutter shape.
Separately from the resin cover, a flat liquid crystal display element having a size of 40 (w) × 80 (l) mm and a polarizing plate laminated on one surface was prepared. The following photocurable resin composition was applied in a line shape to both longitudinal edges of the polarizing plate-side surface of the liquid crystal display device as an adhesive. The composition was temporarily cured by irradiating with ultraviolet rays (300 mW/cm$^2$) at 4000 mJ/cm$^2$.

(Photocurable resin composition)

The photocurable resin composition was prepared by uniformly mixing 50 parts by mass of an acrylate-based oligomer (TE-2000, Nippon Soda Co., Ltd.) having a polybutadiene skeleton, 20 parts by mass of hydroxyethyl methacrylate, and 10 parts by mass of photopolymerization initiators (3 parts by mass of Irgacure 184 manufactured by BASF Japan, and 7 parts by mass of SpeedCure TPO manufactured by DKSH Japan Co., Ltd.). The photocurable resin composition exhibited a total curing shrinkage rate of 5.6 % between a cure rate of from 0% to 90%.
Subsequently, the resin cover was placed so that the concave surface thereof was on the polarizing plate side, and a pressure was applied from the resin cover side to bond them and obtain a hollow body.

<Step (B): Formation of liquid accommodating portion>

The hollow body was pressed vertically against a dam member in which a fluororesin sheet having a thickness of 100 μm was disposed on a silicone rubber sheet having a thickness of 3 mm to form a liquid accommodating portion. The pressing force was about 5 N/cm$^2$.

<Step (C): Filling of photocurable resin composition>

The liquid accommodating portion was filled with the same photocurable resin composition used as the adhesive under vacuum (-0.08 to -0.1 MPa) using a resin dispenser. The liquid surface of the photocurable resin composition was flush with the upper surface of the liquid accommodating portion.

<Step (D): Formation of cured resin layer>

The cured resin layer was formed by irradiating the photocurable resin composition filled in the liquid accommodating portion with ultraviolet rays (400 mW/cm$^2$) at 6000 mJ/cm$^2$ from the resin cover side using an ultraviolet irradiation device (H-10MAH20-1T18 equivalent product manufactured by Hoya Candeo Optronics Corporation). The cure rate of the cured resin layer was 98%. As a result, a liquid crystal display device was obtained in which the curved resin cover as a light transmissive cover member was laminated on the liquid crystal element with a cured resin layer interposed therebetween.
The stress of the curing shrinkage was concentrated on the opening side of the liquid accommodating portion, and a cure shrinkage space was generated. Specifically, when the liquid level height of the photocurable resin composition in the liquid accommodating portion was 100, the height of the cured resin layer was about 94%, and a cure shrinkage space of about 6% was generated.
The photocurable resin composition used previously was filled again into the cure shrinkage space and photocured. In the obtained image display device, no voids were observed at the interface between the resin cover and the image display element. Further, when the display operation was performed, no color unevenness was observed in the display at the center of the resin cover.

Comparative example 1

After the photocurable resin composition was applied to the curved resin cover and temporarily cured without forming the hollow body, the same image display element as that used in Example 1 was superposed under vacuum in the horizontal direction. After bonding the image display element by applying a pressure from the resin cover side, a pressurized defoaming treatment was performed. Subsequent irradiation of ultraviolet rays from the resin cover side could provide a liquid crystal display device in which the curved resin cover as a light transmissive cover member was laminated onto the liquid crystal display element with the cured resin layer interposed therebetween.

In the obtained image display device, a large number of voids were observed at the interface between the resin cover and the image display element, and when a display operation was performed, color unevenness was observed in the display at the center of the resin cover.

In the manufacturing method of the image display device of the present invention, the image display member and the curved light transmissive cover member are integrated with each other with the concave surface of the light transmissive cover member facing the image display member to form a hollow body having a hollow portion with a pair of first and second openings. Afterwards, a dam member is disposed in the first opening of the hollow body to form the hollow portion as a liquid accommodating portion. Then, the liquid accommodating portion is filled with the photocurable resin composition from the second opening, and subsequently, the photocurable resin composition filled in the liquid accommodating portion is irradiated with ultraviolet rays from the side of the cured light transmissive cover member to form a cured resin layer while concentrating a cure shrinkage space on the second opening side, wherein the ultraviolet rays are irradiated so as to scan from the first opening side toward the second opening side. For this reason, it is possible to prevent voids from occurring on the display surface of the image display device. Furthermore, it is possible to reduce the residual stress of the cured resin layer so as to prevent display color unevenness from occurring. Therefore, the manufacturing method of the present invention is useful for industrial manufacture of an image display device of an in-vehicle information terminal having a touch panel.

Reference Signs List

| 1 | image display member |
| 2 | light transmissive cover member |
| 2a | concave surface |
| 2b | flat part |
| 10 | hollow body |
| 10a | first opening |
| 10b | second opening |
| 20 | hollow portion |
| 30 | adhesive |
| 40 | dam member |
| 50 | liquid accommodating portion |
| 50a | cure shrinkage space |
| 60 | photocurable resin composition |
| 70 | cured resin layer |

**Claims**

1.  A method for manufacturing an image display device in which an image display member (1) and a curved light transmissive cover member (2) are laminated with a cured resin layer (70) interposed therebetween, the method comprising the following steps (A) to (D):

    <Step (A)>
    a step of integrating the image display member (1) and the curved light transmissive cover member (2) with each other with a concave surface (2a) of the light transmissive cover member (2) facing the image display member (1) to form a hollow body (10) having a hollow portion (20) with a pair of first (10a) and second (10b) openings;
<Step (B)>
a step of disposing a dam member (40) in the first opening (10a) of the hollow body (10) to form the hollow portion (20) as a liquid accommodating portion (50);
<Step (C)>
a step of filling the liquid accommodating portion (50) with a photocurable resin composition (60) from the second opening (10b); and
<Step (D)>

a step of irradiating the photocurable resin composition (60) filled in the liquid accommodating portion (50) with ultraviolet (UV) rays from the side of the curved light transmissive cover member (2) to form a cured resin layer (70) while concentrating a cure shrinkage space (50a) on the second opening side (10b), wherein the ultraviolet (UV) rays are irradiated so as to scan from the first opening side (10a) toward the second opening side (10b).

2. The manufacturing method according to claim 1, wherein after the step (D), the photocurable resin composition (60) is filled into the cure shrinkage space (50a) generated in the step (D) and photocured.

3. The manufacturing method according to claim 1 or 2 , wherein the hollow body (10) is erected in the step (B).

4. The manufacturing method according to any one of claims 1 to 3, wherein the image display member (1) has a polarizing plate, and in the step (A) the polarizing plate of the image display member (1) and the concave surface (2a) of the curved light transmissive cover member (2) face each other.

5. The manufacturing method according to any one of claims 1 to 4, wherein the filling in the step (C) is performed under vacuum.

6. The manufacturing method according to any one of claims 1 to 5, wherein a pressurized defoaming treatment is performed between the step (C) and the step (D).

7. The manufacturing method according to any one of claims 1 to 6, wherein the image display member (1) is a liquid crystal display panel, an organic EL display panel, a plasma display panel, or a touch panel.

8. The manufacturing method according to any one of claims 1 to 7, wherein in the step (D) final curing is performed so that a cure rate of the cured resin layer (70) becomes 90% or more.

9. The manufacturing method according to any one of claims 1 to 8, wherein the photocurable resin composition (60) is a liquid resin composition containing a component (a) of a base component containing at least any one of an elastomer and an acrylate-based oligomer, a component (b) of an acryl-based monomer component, a component (c) of a plasticizer component, and a component (d) of a photopolymerization initiator, the elastomer of the component (a) is at least one selected from the group consisting of an acrylic copolymer, polybutene, and polyolefin, and the acrylate-based oligomer of the component (a) is at least one selected from the group consisting of a polyurethane-based (meth)acrylate, a polybutadiene-based (meth)acrylate, and a polyisoprene-based (meth)acrylate.

**Patentansprüche**

1. Verfahren zur Herstellung einer Bildanzeigevorrichtung, in der ein Bildanzeigeelement (1) und ein gebogenes lichtdurchlässiges Abdeckelement (2) mit einer dazwischenliegenden gehärteten Harzschicht (70) laminiert sind, wobei das Verfahren die folgenden Schritte (A) bis (D) umfasst:

<Schritt (A)>
einen Schritt des Miteinanderintegrierens des Bildanzeigeelements (1) und des gebogenen lichtdurchlässigen Abdeckelements (2) mit einer konkaven Oberfläche (2a) des lichtdurchlässigen Abdeckelements (2), die dem Bildanzeigeelement (1) gegenüberliegt, um einen Hohlkörper (10) mit einem Hohlraum (20) mit einem Paar erster (10a) und zweiter (10b) Öffnungen zu bilden;
<Schritt (B)>
einen Schritt des Anordnens eines Aufstauelements (40) in der ersten Öffnung (10a) des Hohlkörpers (10), um den Hohlraum (20) als einen flüssigkeitsaufnehmenden Raum (50) zu bilden;
<Schritt (C)>
einen Schritt des Befüllens des flüssigkeitsaufnehmenden Raumes (50) mit einer photohärtbaren Harzzusammensetzung (60) von der zweiten Öffnung (10b); und
<Schritt (D)>

einen Schritt des Bestrahlens der in den flüssigkeitsaufnehmenden Raum (50) gefüllten photohärtbaren Harzzusammensetzung (60) mit ultravioletten (UV) Strahlen von der Seite des gebogenen lichtdurchlässigen Abdeckelements (2), um eine gehärtete Harzschicht (70) zu bilden, während ein Aushärtungsschrumpfungsraum (50a) auf der zweiten Öffnungsseite (10b) konzentriert wird,
wobei die ultravioletten (UV) Strahlen so eingestrahlt werden, dass sie von der ersten Öffnungsseite (10a) zu der zweiten Öffnungsseite (10b) hin abtasten.

2. Herstellungsverfahren nach Anspruch 1, wobei nach dem Schritt (D) die photohärtbare Harzzusammensetzung (60) in den im Schritt (D) erzeugten Aushärtungsschrumpfungsraum (50a) eingefüllt und photogehärtet wird.

3. Herstellungsverfahren nach Anspruch 1 oder 2, wobei der Hohlkörper (10) im Schritt (B) aufgerichtet wird.

4. Herstellungsverfahren nach einem der Ansprüche 1 bis 3, wobei das Bildanzeigeelement (1) eine Polarisierungsplatte aufweist und im Schritt (A) die Polarisierungsplatte des Bildanzeigeelements (1) und die konkave Oberfläche (2a) des gebogenen lichtdurchlässigen Abdeckelements (2) sich gegenüber liegen.

5. Herstellungsverfahren nach einem der Ansprüche 1 bis 4, wobei das Befüllen im Schritt (C) unter Vakuum durchgeführt wird.

6. Herstellungsverfahren nach einem der Ansprüche 1 bis 5, wobei eine Druckentschäumungsbehandlung zwischen dem Schritt (C) und dem Schritt (D) durchgeführt wird.

7. Herstellungsverfahren nach einem der Ansprüche 1 bis 6, wobei das Bildanzeigeelement (1) eine Flüssigkristallanzeigetafel, eine organische EL-Anzeigetafel, eine Plasmaanzeigetafel oder eine Berührungsanzeigetafel ist.

8. Herstellungsverfahren nach einem der Ansprüche 1 bis 7, wobei im Schritt (D) die Endhärtung so durchgeführt wird, dass eine Aushärtungsrate der gehärteten Harzschicht (70) 90 % oder mehr beträgt.

9. Herstellungsverfahren nach einem der Ansprüche 1 bis 8, wobei die photohärtbare Harzzusammensetzung (60) eine flüssige Harzzusammensetzung ist, die eine Komponente (a) einer Basiskomponente, die mindestens eines von einem Elastomer und einem Oligomer auf Acrylatbasis enthält, eine Komponente (b) einer Monomerkomponente auf Acrylbasis, eine Komponente (c) einer Weichmacherkomponente und eine Komponente (d) eines Photopolymerisationsinitiators enthält, wobei das Elastomer der Komponente (a) mindestens eines ist, ausgewählt aus der Gruppe, bestehend aus einem Acrylcopolymer, Polybuten und Polyolefin, und das Oligomer auf Acrylatbasis der Komponente (a) mindestens eines ist, ausgewählt aus der Gruppe, bestehend aus einem (Meth)acrylat auf Polyurethanbasis, einem (Meth)acrylat auf Polybutadienbasis und einem (Meth)acrylat auf Polyisoprenbasis.

## Revendications

1. Procédé de fabrication d'un dispositif d'affichage d'image dans lequel un élément d'affichage d'image (1) et un élément de recouvrement incurvé transmissif à la lumière (2) sont stratifiés avec une couche de résine durcie (70) interposée entre eux,
le procédé comprenant les étapes suivantes (A) à (D) :

<Étape (A)>
une étape consistant à intégrer l'élément d'affichage d'image (1) et l'élément de recouvrement incurvé transmissif à la lumière (2) l'un à l'autre avec une surface concave (2a) de l'élément de recouvrement transmissif à la lumière (2) tournée vers l'élément d'affichage d'image (1) pour former un corps creux (10) ayant une portion creuse (20) avec une paire de première (10a) et seconde (10b) ouvertures ;
<Étape (B)>
une étape consistant à disposer un élément de barrage (40) dans la première ouverture (10a) du corps creux (10) pour former la portion creuse (20) en tant que portion d'hébergement de liquide (50) ;

<Étape (C)>

une étape consistant à remplir la portion d'hébergement de liquide (50) d'une composition de résine photodurcissable (60) depuis la seconde ouverture (10b) ; et

<Étape (D)>

une étape consistant à irradier la composition de résine photodurcissable (60) versée dans la portion d'hébergement de liquide (50) avec des rayons ultraviolets (UV) depuis le côté de l'élément de recouvrement incurvé transmissif à la lumière (2) pour former une couche de résine durcie (70) tout en concentrant un espace de retrait de durcissement (50a) sur le côté de seconde ouverture (10b),

dans lequel les rayons ultraviolets (UV) sont irradiés de manière à balayer du côté de première ouverture (10a) vers le côté de seconde ouverture (10b).

2. Procédé de fabrication selon la revendication 1, dans lequel après l'étape (D), la composition de résine photodurcissable (60) est versée dans l'espace de retrait de durcissement (50a) généré à l'étape (D) et photodurcie.

3. Procédé de fabrication selon la revendication 1 ou 2, dans lequel le corps creux (10) est monté à l'étape (B).

4. Procédé de fabrication selon l'une quelconque des revendications 1 à 3, dans lequel l'élément d'affichage d'image (1) a une plaque de polarisation, et à l'étape (A), la plaque de polarisation de l'élément d'affichage d'image (1) et la surface concave (2a) de l'élément de recouvrement incurvé transmissif à la lumière (2) sont tournées l'une vers l'autre.

5. Procédé de fabrication selon l'une quelconque des revendications 1 à 4, dans lequel le remplissage à l'étape (C) est réalisé sous vide.

6. Procédé de fabrication selon l'une quelconque des revendications 1 à 5, dans lequel un traitement de démoussage pressurisé est réalisé entre l'étape (C) et l'étape (D).

7. Procédé de fabrication selon l'une quelconque des revendications 1 à 6, dans lequel l'élément d'affichage d'image (1) est un écran d'affichage à cristaux liquides, un écran d'affichage EL organique, un écran d'affichage plasma ou un écran tactile.

8. Procédé de fabrication selon l'une quelconque des revendications 1 à 7, dans lequel à l'étape (D), un durcissement final est réalisé de sorte qu'un taux de durcissement de la couche de résine durcie (70) devient 90 % ou plus.

9. Procédé de fabrication selon l'une quelconque des revendications 1 à 8, dans lequel la composition de résine photodurcissable (60) est une composition de résine liquide contenant un composant (a) d'un composant de base contenant au moins l'un quelconque d'un oligomère élastomère et d'un oligomère à base d'acrylate, un composant (b) d'un composant monomère à base d'acryle, un composant (c) d'un composant de plastifiant, et un composant (d) d'un initiateur de photopolymérisation, l'élastomère du composant (a) est au moins un sélectionné parmi le groupe constitué d'un copolymère acrylique, du polybutène et d'une polyoléfine, et l'oligomère à base d'acrylate du composant (a) est au moins un sélectionné parmi le groupe constitué d'un (méth)acrylate à base de polyuréthane, d'un (méth)acrylate à base de polybutadiène et d'un (méth)acrylate à base de polyisoprène.

# FIG. 1A

# FIG. 1B

# FIG. 1C

# FIG. 1D

# FIG. 2A

FIG. 2B

# FIG. 3

# FIG. 4A

# FIG. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014119520 A
- US 2011205472 A1
- JP 2017025237 A
- WO 2016074917 A1
- JP 2015162184 A
- JP 2015087402 A
- JP 2006058753 A
- JP 2016066607 A
- JP 2011046174 A